# EUROPÄISCHE PATENTSCHRIFT

(11) **EP 0 876 847 B1**
(45) Veröffentlichungstag und Bekanntmachung des Hinweises auf die Patenterteilung: **28.11.2001**
(21) Anmeldenummer: 98108335.5
(22) Anmeldetag: 06.05.1998
(51) Int. Cl.: B03B 5/32, B29B 17/02

(54) **Verfahren zur Trennung von Mischkunststoffen**
Method for separating a mixture of plastics
Procédé pour séparer un mélange de matières plastiques

(30) Priorität: 09.05.1997 DE 19719734
(43) Veröffentlichungstag der Anmeldung: 11.11.1998
(73) Patentinhaber: Baker Hughes (Deutschland) GmbH, 29221 Celle (DE)
(72) Erfinder: Neureither, Jochen, 69121 Heidelberg (DE); Unkelbach, Karl-Heinz, Dr., 50996 Köln (DE)
(74) Vertreter: Finck, Dieter, Dr.Ing.

(56) Entgegenhaltungen:
- WO-A-92/22380
- DE-A- 2 539 960
- DE-A- 2 900 666
- DE-A- 4 208 104
- DE-A- 4 306 781
- DE-A- 19 606 415

## Beschreibung

Die Erfindung betrifft ein Verfahren zur nassmechanischen Trennung von Feststoffen unterschiedlicher Dichte aus Feststoffgemischen, beispielsweise Haus- oder Gewerbemüllgemischen, bestehend aus Kunststoffen (PVC, PO, PS, PA, PET, PE, PP), die mit mineralischen Schwerstoffen wie Sanden und/oder mit anderen spezifisch schweren Feststoffen wie z. B. Metallen verunreinigt sind, mit Einsatz einer Trennflüssigkeit, mit der das verunreinigte Kunststoffgemisch in einer Sortierzentrifuge in eine spezifisch leichte Kunststofffraktion und in eine spezifisch schwere Fraktion getrennt wird.

Nach zur Zeit gültigen gesetzlichen Richtlinien (DSD-Richtlinien) sollen Kunststoffgemische aus Haus- oder Gewerbemüllgemischen zu 80% recycelt werden. Dies kann rohstofflich durch Verbrennung beispielsweise im Hochofen als Reduktionsmittel oder werkstofflich durch Herstellung von Gebrauchsgütern geschehen. In einfachster Weise werden deshalb verschiedene Fraktionen, die der unterschiedlichen Nutzung zugeführt werden, durch Handsortierung hergestellt. Bei der Flaschenfraktion und bei der Folienfraktion handelt es sich vorwiegend um HDPE bzw. LDPE, die nach einer Reinigung werkstofflich gut verwertet werden können

Bei der sogenannten Mischkunststoff-Fraktion ist dies insofern schwieriger, da neben einer Vielzahl unterschiedlicher Kunststoffsorten auch Verbundstoffe sowie unterschiedliche Fremdstoffe als Verunreinigungen in dieser Fraktion enthalten sind. Hier ist nur etwa die Hälfte, die vorwiegend aus PE und PP besteht, durch eine Dichtetrennung abzusondern und einer werkstofflichen Verwertung zuzuführen. Daher wird heute üblicherweise die Mischkunststoff-Fraktion nach einer Abtrennung von etwa 10% an Störstoffen (Metalle etc.) ausschließlich rohstofflich verwertet. Die Abtrennung der Störstoffe wird üblicherweise durch einfache mechanische Verfahren wie Windsichten, Sieben, Magnetscheidung etc. durchgeführt.

Da werkstoffliches Recycling aber das umweltfreundlichere Recycling ist, ist anzustreben, möglichst viel aus der Mischkunststoff-Fraktion der werkstofflichen Verwertung zuzuführen. Hierzu müssen demzufolge zwei Trennungen durchgeführt werden, nämlich die Abtrennung der leichten Kunststoffe (für das werkstoffliche Recycling) und die Abtrennung der spezifisch schweren Störstoffe von den restlichen Kunststoffen (für das rohstoffliche Recycling). Dieses Verfahren ist jedoch mit den bisherigen Methoden sehr aufwendig und daher unwirtschaftlich.

So ist aus der DE-A-43 06 781 ein aufwendiges Verfahren zur Trennung von kunststoffreichen Müllgemischen bekannt, das zwei Sortierzentrifugen aufweist, wobei der für die Altkunststoffverwertung besonders störende PVC-Anteil erst in der spezifisch schweren Fraktion der zweiten Sortierzentrifuge erhalten und in einem nachgeschalteten Schüttelherd vom Restmaterial abgetrennt wird. Außerdem ist es aus der DE-A-29 00 666 bekannt, zur Trennung von Kunststoffgemischabfällen ausschließlich Hydrozyklone einzusetzen, bei denen aber die Trennschärfe der Sortierung unbefriedigend ist, so dass mit diesem Verfahren eine sortenreine Gewinnung von Recyclaten bzw. Regranulaten aus Altkunststoffgemischen nicht möglich ist.

Aufgabe der Erfindung ist es, ein Verfahren zu schaffen, mit dem die Trennung von Kunststoffmischungen der o. g. Art in einfacher und wirtschaftlicher Weise mit dem Ziel, einen möglichst hohen Anteil an werkstofflich verwertbaren Kunststoffen abzutrennen, möglich ist, wobei die restliche Kunststofffraktion wenigstens rohstofflich gut verwertbar sein soll.

Die gestellte Aufgabe wird erfindungsgemäß gelöst mit den Maßnahmen des Anspruchs 1. Nach einer Zerkleinerung mit nachgeschalteter Magnetscheidung wird die in einem Anmaischbehälter mit einer Trennflüssigkeit in eine Suspension überführte Kunststoffmischung nacheinander einem Hydrozyklon und danach nur noch einer Sortierzentrifuge zugeführt und so unter dem Einfluß von Zentrifugalkräften nach der Dichte in mehrere Dichtefraktionen getrennt.

Vorteilhafte Ausgestaltungen der Erfindung werden in den Unteransprüchen angegeben.

Die Schaltung einer Sortierzentrifuge hinter einem Hydrozyklon für die Trennung von Kunststoffgemischen ist in der älteren, nicht vorveröffentlichten DE-196 06 415.5 beschrieben. Das dort beschriebene Verfahren dient zur Abtrennung unerwünschter Verunreinigungen aus Kunststoffmischungen wie beispielsweise aus einer stark verschmutzten Folienfraktion oder aus einer Fraktion aus Kunststoffflaschen

Es hat sich nun gezeigt, daß die dort beschriebene Vorrichtung, die sich auf die Trennung verschmutzter Kunststoffmischungen beschränkt, erfindungsgemäß für das Recyclen schwierig aufzubereitender Mischkunststoffe angewendet werden kann.

Gemäß der Erfindung wird das zu trennende Kunststoffgemisch zunächst zerkleinert, vorzugsweise auf kleiner 20mm. Die Zerkleinerung ist normalerweise einstufig, kann aber je nach Materialgröße und Materialart auch mehrstufig durchgeführt werden. Daran anschließend, bei mehrstufiger Zerkleinerung auch zwischen den Zerkleinerungsstufen, erfolgt dann ggfs. eine Magnetscheidung und/oder eine Wirbelstromscheidung, mit der abtrennbare Metalle aussortiert werden. Das zerkleinerte Kunststoffgemisch wird nun in einem Rührbehälter, der einen Schwergutaustrag am Boden aufweist, mit einer Trennflüssigkeit zu einer Suspension angemaischt, wobei durch den Schwergutaustrag ggfs. vorhandene spezifisch schwere Störstoffe (Sande, Metalle etc.) von der Suspension abgetrennt werden.

Aus dem Rührbehälter wird die dort hergestellte Suspension einem Hydrozyklon zu einer ersten Trennung unter dem Einfluß von Zentrifugalkräften aufgegeben. Der Hydrozyklon, der vorzugsweise ein Flachbodenzyklon ist, ist dabei so optimiert eingestellt, daß neben den unerwünschten spezifisch schweren Verunreinigungen (Störstoffe) auch der spezifisch schwere PVC-Anteil des Kunststoffgemisches als Hydrozyklonunterlauf von den übrigen Kunststoffen abgetrennt wird.

Die Schwerprodukte aus dem Rührbehälterunterlauf und aus dem Hydrozyklonunterlauf können getrennt oder zusammengefaßt weiterverarbeitet werden, beispielsweise lassen sich aus diesem Produkt durch Magnetscheidung und/oder Wirbelstromscheidung sehr gut reine Metallprodukte gewinnen (kleiner Volumenstrom folienfrei). Der Rest wird dann verworfen. Er beträgt wie bei der konventionellen Sortierung etwa 10 bis 15% bezogen auf die Ausgangsmenge.

Der Hydrozyklonüberlauf gelangt nun direkt in eine Sortierzentrifuge, in der unter dem Einfluß von Zentrifugalkräften eine weitere Trennung des verbliebenen Kunststoffgemisches durchgeführt wird. Als Austräge werden bei dieser Trennung einmal eine PVC-freie KunststoffFraktion aus schweren Kunststoffen erhalten, die rohstofflich gut verwertet werden kann, z.B. im Hochofen als Reduktionsgaserzeuger. Die Menge beträgt ca. 35 bis 40%.

Weiterhin wird eine Fraktion aus leichten Kunststoffen (PO) erhalten, die werkstofflich mit höherer Wertschöpfung verwertet werden kann. Die hier enthaltene Menge beträgt ca. 40 bis 55%. Die genannten Prozentangaben werden bei einer typischen Mischkunststoff-Fraktion erhalten. Bei stark verschmutztem Material können diese Werte von den angegebenen Grenzen abweichen.

Durch das Verfahren der Erfindung wird eine Möglichkeit angegeben, aus einem Abfallprodukt, das zur Zeit ausschließlich einer rohstofflichen Verwertung zugeführt wird, eine nicht unerhebliche Teilmenge einer werkstofflichen Verwertung zuzuführen, und die rchstofflich gut verwertbare Teilmenge ist PVC-frei. Das dabei angewendete Verfahren ist einfach aufgebaut und kostengünstig zu betreiben. Insbesondere durch den Einsatz einer Sortierzentrifuge lassen sich erhebliche Energiekosten sparen, da die hier ausgetragenen Produkte bereits mechanisch entwässert sind, wodurch sich bei minimalem Bedarf an Trennflüssigkeit eine insgesamt quasi trockene Aufbereitung ergibt.

Weitere Vorteile, Einzelheiten und Merkmale der Erfindung werden nachfolgend anhand eines zeichnerischen Fließschemas eines Ausführungsbeispiels näher erläutert.

Die zur Trennung vorgesehene Kunststoffmischung 10 (Mischkunststoff-Fraktion) wird einer Zerkleinerung 11 aufgegeben, in der das Ausgangsmaterial in einer oder in mehreren Zerkleinerungsstufen auf eine Größe von kleiner 20mm zerkleinert wird. Hieran anschließend werden in einem Magnetscheider 12 magnetisch abtrennbare Metalle 13 aus der Kunststoffmischung entfernt.

Die weitgehend metallfreie Kunststoffmischung 16 wird nun in einen Rührbehälter 14 gegeben, in dem die Kunststoffpartikel mit der Trennflüssigkeit 15, 17 durch intensives Rühren zu einer Supension 19 angemaischt werden, die dann über eine seitliche Austragsöffnung mittels einer Förderpumpe 29 zu einem Hydrozyklon 21 über Leitungen geführt wird. Die beim Rührvorgang freigesetzten spezifisch schweren Störstoffe 18, beispielsweise vorher anhaftender Schmutz oder aufgelöste Verbundstoffe sowie verbliebene Metallteile können über eine Austragsöffnung 20 im Boden des Rührbehälters abgezogen werden.

Der Hydrozyklon 21, in dem nun eine Trennung unter dem Einfluß von Zentrifugalkräften nach der Dichte durchgeführt wird, ist vorzugsweise ein Flachbodenhydrozyklon, der so optimiert eingestellt ist, daß das in der Kunststoffmischung enthaltene PVC mit den spezifisch schweren Störstoffen wie beispielsweise Metalle, Sande etc. als Hydrozyklonunterlauf 23 ausgetragen wird. Der Hydrozyklonunterlauf 23 sowie die schweren Störstoffe 18, die am Boden des Rührgefäßes abgezogen worden sind, werden zusammengeführt und als Mischung 28 einer weiteren Sortierung zugeführt.

Das vom PVC und den Störstoffen befreite restliche Kunststoffgemisch wird als Suspension 22 als Hydrozyklonüberlauf ausgetragen und direkt einer Sortierzentrifuge 25 aufgegeben. Hie erfolgt nun eine weitere Auftrennung unter dem Einfluß von Zentrifugalkräften, wobei eine die spezifisch leichten Kunststoffe (PO) enthaltende Fraktion 27 sowie eine die restlichen spezifisch schweren Kunststoffe enthaltende Fraktion 26 getrennt voneinander ausgetragen werden.

Die Trennflüssigkeit 17, die in der Sortierzentrifuge 25 separat ausgetragen wird, da die Sortierzentrifuge gleichzeitig eine mechanische Entwässerung durchführt, wird über eine Leitung oder durch Überlauf mittels einer Pumpe 30 zum Rührbehälter 14 zurückgeführt.

Durch das Rezirkulieren der Trennflüssigkeit tritt nur ein geringer Verlust an Trennflüssigkeit durch anhaftende Trennflüssigkeit an den erhaltenen Produkten 18, 23, 26, 27 auf, der durch Zugabe von frischer Trennflüssigkeit 15 zum Rührbehälter 14 ersetzt wird.

### Erklärung der verwendeten Abkürzungen:

- PVC =: Polyvinylchlorid
- PO =: Gemisch aus PE (Polyethylen) und PP (Polypropylen) = Polyolefine
- PS =: Polystyrol
- PA =: Polyamid
- PET =: Polyethylenterephthalat
- PE und PP: siehe oben
- HDPE =: High Density PE
- LDPE =: Low Density PE

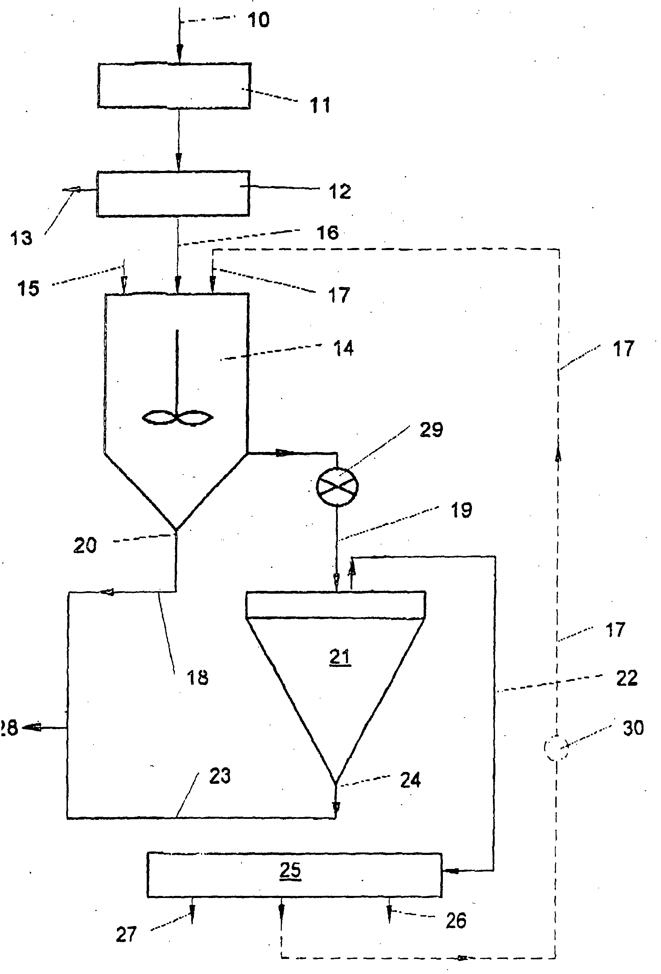

## Patentansprüche

1. Verfahren zur nassmechanischen Trennung vor Feststoffen unterschiedlicher Dichte aus Feststoffgemischen, beispielsweise Haus- oder Gewerbemüllgemischen, bestehend aus Kunststoffen (PVC, PO, PS, PA, PET, PE PP), die mit mineralischen Schwerstoffen wie Sanden und/oder mit anderen spezifisch schweren Feststoffen wie z B. Metallen verunreinigt sind, mit Einsatz einer Trennflüssigkeit, mit der das verunreinigte Kunststoffgemisch in einer Sortierzentrifuge (25) in eine spezifisch leichte Kunststofffraktion (27) und in eine spezifisch schwere Fraktion (26) getrennt wird, **gekennzeichnet durch** die Kombination folgender hintereinander geschalteter Verfahrensschritte
a) Zerkleinerung (11) der Kunststoffmischung,
b) Anmaischen der zerkleinerten Kunststoffmischung in einem Rührbehälter (14) mit der Trennflüssigkeit und Abzug der beim Rührvorgang freigesetzten spezifisch schweren Störstoffe (18) Sande, Metalle, Schmutz über eine Austragsöffnung (20) im Boden des Rührbehälters,
c) Abtrennung restlicher spezifisch schwerer Verunreinigungen und des PVC-Anteils des Kunststoffgemisches in einem Hydrozyklon (21) als Hydrozyklonunterlauf (23),
d) Sortierung des vom PVC und den Störstoffen befreiten restlichen im Hydrozyklonüberlauf (22) enthaltenen Kunststoffgemisches in der Sortierzentrifuge (25) in eine spezifisch leichte die Polyolefine (PO) enthaltende Fraktion (27) und eine PVC-freie spezifisch schwere Restkunststofffraktion (26).

2. Verfahren nach Anspruch 1, **dadurch gekennzeichnet, dass** als Hydrozyklon (21) ein Flachbodenhydrozyklon verwendet wird.

3. Verfahren nach Anspruch 1, **dadurch gekennzeichnet, dass** die Zerkleinerung der Kunststoffmischung (Merkmal a) auf kleiner 20 mm durchgeführt wird.

4. Verfahren nach Anspruch 1, **dadurch gekennzeichnet, dass** der Zerkleinerung (11) eine Metallabtrennung (12) durch Magnetscheidung und/oder Wirbelstromscheidung nachgeschaltet ist.

5. Verfahren nach Anspruch 1, **dadurch gekennzeichnet, dass** die Schwerstoffe (18) aus dem Rührbehälterunterlauf und die Schwerstoffe des Hydrozyklonunterlaufs (23) mit dem PVC getrennt oder als Mischung (28) zusammengeführt einer weiteren Sortierung zugeleitet werden.

## Claims

1. A method for the wet mechanical separation of solids of differing densities from mixtures of solids, for instance house or trade waste mixtures comprising plastics materials (PVC, PO, PS, PCT, PA, PE, PP), which are contaminated with heavy mineral materials such as sand and/or specific heavy solids such as for instance metals, with the application of a separating fluid, with which the contaminated plastics materials mixture is separated in a sorting centrifuge (25) into a specifically light plastics material fraction (27) and a specifically heavy fraction (26). **characterised by** the combination of the following sequential steps in the method
a) fragmentation (11) of the plastics material mixture,
b) mixing of the fragmented plastics material mixture in a mixing vessel (14) with the separating fluid and extraction of the specifically heavy materials (18) sands, metals, dirt via an extraction opening (20) in the base of the mixing vessel,
c) separation of the remaining specifically heavy contaminants and the PVC portion of the plastics material mixture in a hydrocyclone (21) as hydrocyclone underflow (23),
d) sorting of the remaining plastics material mixture freed from PVC and contaminants, in the hydrocyclone overflow (22) in the sorting centrifuge (25) into a specific light fraction (27) including the polyolefines (PO) and a PVC-free specific heavy remaining plastics material fraction (26).

2. A method according to Claim 1, **characterised in that** a flat base hydrocyclone is used as the hydrocyclone (21).

3. A method according to Claim 1, **characterised in that** the fragmentation (11) of the plastics material mixture (Point a) is carried out to smaller than 20mm.

4. A method according to Claim 1, **characterised in that** the fragmentation (11) follows a metal separation (12) by magnetic separation and/or turbulence stream separation.

5. A method according to Claim 1, **characterised in that** the heavy material (18) from the mixing vessel underflow and the heavy material of the hydrocyclone underflow (23), with the PVC separated or as a mixture (28) are taken together to a further sorting.

## Revendications

1. Procédé de séparation mécanique humide de matières solides de différentes densités, à partir de mélanges de matières solides, par exemple des mélanges de déchets domestiques ou industriels formés de matières plastiques (PVC, PO, PS, PA, PET, PE, PP) qui sont contaminées par des sédiments denses, minéraux comme des sables, et/ou par d'autres sédiments denses spécifiquement comme par exemple des métaux, par utilisation d'un liquide de séparation avec lequel on sépare le mélange de matières plastiques souillé dans une centrifugeuse de tri (25) en une fraction de matières plastiques spécifiquement légères (27) et en une fraction spécifiquement lourde (26),
**caractérisé par**
la combinaison des étapes de procédé suivante connectées les unes derrière les autres :
a) broyage (11) du mélange de matières plastiques,
b) malaxage du mélange de matières plastiques broyées dans un conteneur d'agitation (14) avec le liquide de séparation, et extraction des produits contaminants (18) spécifiquement lourds, libérés au cours du processus d'agitation (sables, métaux, saletés), par l'intermédiaire d'un orifice d'évacuation (20) dans le fond du conteneur d'agitation,
c) séparation des impuretés spécifiquement lourdes résiduelles et des fractions de PVC du mélange de matières plastiques dans un hydrocyclone (21) sous forme de flux inférieur de cyclone (23),
d) tri du mélange résiduel de matières plastiques contenu dans le flux supérieur de l'hydrocyclone (22) débarrassé du PVC et des substances gênantes, dans la centrifugeuse de tri (25) en une fraction (27) spécifiquement légère contenant les polyoléfines (PO) et une fraction résiduelle de matières plastique spécifiquement lourdes, dépourvue de PVC (26).

2. Procédé selon la revendication 1,
**caractérisé en ce qu'**
on utilise comme hydrocyclone (21) un hydrocyclone à fond plat.

3. Procédé selon la revendication 1,
**caractérisé en ce qu'**
on effectue le broyage du mélange de matières plastiques (caractéristique a) en des particules plus petites que 20 mm.

4. Procédé selon la revendication 1,
**caractérisé en ce que**
le broyage (11) est post-connecté à une séparation de métal (12) par séparation magnétique et/ou séparation sur lit fluidifié.

5. Procédé selon la revendication 1,
**caractérisé en ce que**
les matériaux lourds (18) provenant du flux inférieur du conteneur d'agitation et les matériaux lourds du flux inférieur de l'hydrocyclone (23) sont conduits avec le PVC d'une manière séparée ou bien réunis sous forme de mélange (28), à un calibrage supplémentaire.
